# EUROPÄISCHE PATENTSCHRIFT

(11) **EP 3 621 186 B1**
(45) Veröffentlichungstag und Bekanntmachung des Hinweises auf die Patenterteilung: **17.03.2021**
(21) Anmeldenummer: 19186208.5
(22) Anmeldetag: 15.07.2019
(51) Int. Cl.: H02K 15/12, B05C 3/09, B05C 11/06, B08B 1/00, B08B 3/02, B08B 5/02

(54) **REINIGUNGSVORRICHUTNG UND VERFAHREN ZUM REINIGEN EINES IM TAUCHVERFAHREN BESCHICHTETEN KÖRPERS**
CLEANING DEVICE AND METHOD FOR CLEANING A DIPPED COATED BODY
DISPOSITIF DE NETTOYAGE ET PROCÉDÉ DE NETTOYAGE D'UN CORPS REVÊTU TREMPÉ

(30) Priorität: 05.09.2018 DE 102018121708
(43) Veröffentlichungstag der Anmeldung: 11.03.2020
(73) Patentinhaber: VAF GmbH, 73441 Bopfingen (DE)
(72) Erfinder: Braun, Thomas, 73469 Riesbürg (DE); Salvasohn, Dominik, 73460 Hüttlingen (DE); Fischer, Matthias, 73441 Bopfingen (DE)
(74) Vertreter: Schorr, Peter Karl

(56) Entgegenhaltungen:
- DE-A1-102008 054 810
- DE-B- 1 018 552
- GB-A- 807 805
- GB-A- 915 328
- JP-A- H0 956 124
- JP-A- S6 077 650
- JP-A- H08 206 572
- JP-A- 2003 169 451
- US-A- 5 902 402
- US-A1- 2004 211 449

## Beschreibung

Die Erfindung betrifft eine Reinigungsvorrichtung zum Abreinigen eines Wickelguts, das im Tauchverfahren in einem ein Beschichtungsfluid umfassenden Beschichtungsfluidbehälter beschichtet worden ist, wobei die Reinigungsvorrichtung zumindest eine Funktionsflächenreinigungseinrichtung aufweist, mittels der überschüssiges Beschichtungsfluid von einer Funktionsfläche des Wickelguts unmittelbar mit oder beim Austauchen aus dem Beschichtungsfluid abreinigbar ist.

Ein wesentlicher Bestandteil der Herstellung von Elektromotoren ist die Herstellung von Spulen. Spulen umfassen üblicherweise einen Spulenkern, um den ein Draht gewickelt ist. Ein derartiges Bauteil, das einen gewickelten Draht umfasst, wird auch als Wickelgut bezeichnet.

Ferner umfassen Wickelgüter häufig auch Funktionsflächen, beispielsweise Abstandshalter, Lagerflächen oder dergleichen. Bei der Herstellung von Wickelgütern kann das Wickelgut beschichtet und/oder imprägniert werden. Aufgrund der durch den gewickelten Draht ausgebildeten feinen Struktur, ist der Übergang zwischen Beschichten, also einer reinen Oberflächenbehandlung, und Imprägnieren, also einer Behandlung, die auch ein inneres des Objekts betrifft, fließend. Im Folgenden wird unter dem Begriff Beschichten auch ein Imprägnieren verstanden.

Aufgrund der angesprochenen feinen Oberflächenstruktur, erfolgt das Beschichten von Wickelgütern üblicherweise mittels eines Tauchverfahrens. Hierbei stellt sich die Herausforderung, dass das Wickelgut gleichmäßig benetzt werden soll, dass aber flüssige Beschichtungsmittel, im folgenden Beschichtungsfluide, dazu neigen nach einem Austauchen des Wickelguts Tropfnasen zu bilden. Diese Tropfenasen sind insbesondere im Bereich der Funktionsflächen nachteilig, da sie einer maßhaltigen Ausgestaltung im Bereich der Funktionsflächen entgegenstehen. Aufgrund der geringen Toleranzen bei elektronischen Bauteilen im Bereich von unter 0,1 mm machen eventuell vorhandene Tropfnasen es erforderlich, dass die Funktionsflächen nach dem Beschichten nachgearbeitet werden müssen.

Um eine möglichst gleichmäßige Schichtdicke zu erreichen sind aus dem Stand der Technik unterschiedliche Reinigungsvorrichtungen bekannt, die unter anderem in der DE 10 2010 060 515 B4 und der DE 10 2009 045 200 A1 beschrieben sind. Das Abreinigen der beschichteten Wickelgüter, erfolgt hierbei mittels einer separaten Vorrichtung, außerhalb des Tauchbeckenbereiches mit gasförmigen Medien unter hohem Druck und hohem Volumenstrom.

Hierbei ist insbesondere nachteilig, dass das Wickelgut nach dem Austauchen zunächst an eine weitere Position verfahren werden muss, was eine Prozessdauer verlängert. Darüber hinaus weisen die beschriebenen Verfahren einen hohen Energiebedarf sowie hohe Geräusch- und Aerosolemissionen auf, wobei insbesondere die Aerosolemissionen leistungsfähige Absauganlagen erforderlich machen, um eine angemessene Luftqualität zu erhalten. Mit den bekannten Verfahren und Vorrichtungen ist es auch nicht möglich, auf der gesamten Oberfläche des Wickelguts eine einheitliche Schichtdicke auszubilden, insbesondere werden Tropfnasen im Bereich der Funktionsflächen nicht verhindert, sodass mit aufwändigen Reinigungsprozessen nachgearbeitet werden muss.

Gattungsgemäße Reinigungsvorrichtungen sind bekannt aus JP H09 56124 A, GB 915 328 A und GB 807 805 A.

Eine Aufgabe eines Ausführungsbeispiels der Erfindung ist, eine Reinigungsvorrichtung zur Verfügung zu stellen mit der Prozessdauer, Emissionen und Abweichungen von der gewünschten Schichtdicke verringerbar sind

Diese Aufgabe wird erfindungsgemäß dadurch gelöst, dass die Reinigungsvorrichtung zumindest eine in und/ oder um das Wickelgut bewegbare Düse aufweist, mittels der das Wickelgut zumindest abschnittsweise mittels eines mit Druck beaufschlagten, insbesondere gasförmigen, Fluids abreinigbar ist und dass die Reinigungsvorrichtung einen Rücktropfschutz aufweist, der zwischen dem aus dem Beschichtungsfluid ausgetauchten Wickelgut und einer Beschichtungsfluidoberfläche des Beschichtungsfluids anordenbar ist und durch den ein Rücktropfen von überschüssigem Beschichtungsfluid in den Beschichtungsfluidbehälter verhindert ist, wobei der Rücktropfschutz einen Sammelabschnitt aufweist in dem durch den Rücktropfschutz aufgefangenes Beschichtungsfluid gesammelt wird

Durch eine derartige Funktionsflächenreinigungseinrichtung wird es ermöglicht, dass Funktionsflächen des Wickelguts nach einem Austauchen des Wickelguts aus dem Beschichtungsfluid punktuell und zielgerichtet abgereinigt werden kann. Es ist vorgesehen, dass das Abreinigen mittels der Funktionsflächenreinigungseinrichtung erfolgt, solange das Beschichtungsfluid noch teilweise flüssig ist, wodurch überschüssiges Beschichtungsfluid sowohl entfernt, als auch verteilt werden kann um eine einheitliche Schichtdicke zu erreichen.

Durch das unmittelbare Abreinigen nach dem Austauchen, werden Transferwege reduziert. Ferner kann die Reinigungsvorrichtung bauteilreduziert ausgebildet werden, da auf Auffangvorrichtungen verzichtet werden kann, da abtropfendes Beschichtungsfluid direkt in den Beschichtungsfluidbehälter zurückgeführt wird.

Die Funktionsfläche kann einen Blech-Stator des Blechpakets umfassen.

Durch den Rücktropfschutz wird verhindert, dass bereits teilweise ausgehärtetes Beschichtungsfluid in den Beschichtungsfluidbehälter zurücktropft und dort eventuell das im Beschichtungsfluidbehälter angeordnete Beschichtungsfluid verunreinigt. Dies ist insbesondere vorteilhaft, wenn ein Aushärtungsprozess des Beschichtungsfluids irreversibel ist.

Durch den Sammelabschnitt ist es ermöglicht, dass auch große Mengen überschüssigen Beschichtungsfluids mit dem Rücktropfschutz aufgefangen werden können, ohne dass das Risiko einer Verunreinigung des in dem Beschichtungsfluidbehälter angeordneten Beschichtungsfluids besteht. Es ist auch möglich und vorgesehen, dass der Sammelabschnitt einen Ablauf aufweist, durch den das aufgefangene Beschichtungsfluid abgeführt werden kann, beispielsweise zu einer Entsorgungs- und/oder Wiederaufbereitungseinrichtung.

Als besonders vorteilhaft hat es sich erwiesen, wenn eine Vielzahl von in einer Umfangsrichtung um das Wickelgut herum angeordnete Düsen das Wicklegut mittels Druckluft abreinigen und dabei in Richtung des Beschichtungsfluidbehälters verfahren werden, sodass ausreichend flüssiges, überschüssiges Beschichtungsfluid in Richtung des Beschichtungsmittelbehälters verlagert wird und abtropfen kann.

Darüber hinaus erweist es sich als vorteilhaft, wenn die Funktionsflächenreinigungseinrichtung eine Halterung und ein an der Halterung festgelegtes und sich von der Halterung in Richtung der Funktionsfläche erstreckendes streifenförmiges Abstreifelement aufweist, das mit der Funktionsfläche in Anlage bringbar ist und mittels dessen überschüssiges Beschichtungsfluid von der Funktionsfläche abreinigbar ist.

In Weiterbildung letztgenannter Ausführungsform erweist es sich als vorteilhaft, wenn das Abstreifelement aus einem elastischen Material gefertigt ist. Eine vorteilhafte Ausgestaltung des Abstreifelements weist einen Aufbau auf, der einer Wischlippe eines Scheibenwischers für ein Automobil ähnelt.

Es ist auch möglich, dass das Abreinigen berührungslos erfolgen kann, nämlich indem das Abstreifelement stets in einem definierten Abstand zu der Funktionsfläche geführt wird, sodass eine Ausbildung einer definierten Schichtdicke ermöglicht ist.

Ferner ist bei einer Ausführungsform der Reinigungsvorrichtung vorgesehen, dass die Funktionsflächenreinigungseinrichtung einen Rohrkörper und zumindest eine Saugdüse mit einer in Richtung der Funktionsfläche gerichteten und mit dem Rohrkörper fluidleitend verbundenen Saugöffnung aufweist, mittels derer überschüssiges Beschichtungsfluid unter Nutzung eines in dem Rohrkörper ausbildbaren Unterdrucks von der Funktionsfläche abreinigbar ist. Besonders vorteilhaft ist es, wenn die Saugdüse aus einem elastischen Material gefertigt ist, beispielsweise aus einem Elastomer.

In Weiterbildung letztgenannter Ausführungsform erweist es sich als vorteilhaft, wenn die Funktionsflächenreinigungseinrichtung eine Sensorik zum Erfassen überschüssigen Beschichtungsfluids aufweist, die mit einer Steuerung der Funktionsflächenreinigungseinrichtung verbunden ist, um so ein zielgerichtetes Abreinigen der Funktionsfläche zu ermöglichen. Die Sensorik kann beispielsweise Ultraschallsensoren, Laserentfernungsmesser, Kamerasensoren oder ähnliches aufweisen.

Darüber hinaus erweist es sich als zweckmäßig, wenn die Funktionsflächenreinigungseinrichtung ein durch zumindest zwei voneinander beabstandete Umlenkwalzen geführtes und von zumindest einer Antriebswalze antreibbares Endlosband aus einem saugfähigen Material aufweist, das in einem Anlageabschnitt eine der Funktionsfläche zugewandte Reinigungsfläche ausbildet, die zumindest abschnittsweise mit der Funktionsfläche in Anlage bringbar ist. Im Bereich der Reinigungsfläche kann überschüssiges Beschichtungsfluid von dem Endlosband aufgesaugt und in Richtung einer Auspresseinrichtung gefördert werden, die durch zumindest eine der Umlenkwalzen und ein auf einer der Umlenkwalze gegenüberliegenden Seite des Endlosbandes angeordnetes Auspressmittel gebildet ist und in der das Endlosband durch die Umlenkwalze und das Auspressmittel gequetscht und das aufgenommene Beschichtungsfluid in aus dem Endlosband ausgetragen wird.

Die dergestalt ausgebildete Funktionsflächenreinigungseinrichtung entspricht in ihrer äußeren Form im Wesentlichen den sogenannten Band- oder Fingerschleifern. Hierdurch ist es ermöglicht, dass das Endlosband flexibel genug gehalten ist, um sich einfach an eine Form der Funktionsfläche anpassen zu können. Besonders vorteilhaft ist diese Ausführungsform bei Funktionsflächen mit einem konvexen Verlauf.

Ferner können Antriebswalzen zum Umlenken des Endlosbands verwendet werden und die Umlenkwalzen Antriebsmittel aufweisen. Welche der Walzen das Endlosband antreibt und welche es umlenkt, beziehungsweise ob kombinierte Umlenk-Antriebswalzen verwendet werden, richtet sich nach den konstruktiven Erfordernissen des Einzelfalls.

Bei einer vorteilhaften Ausgestaltung der letztgenannten Ausführungsform ist es vorgesehen, dass ein zwischen den Umlenkwalzen ausgebildeter Abstand zumindest die Ausdehnung der Funktionsfläche umfasst. Hierdurch ist es ermöglicht, dass ein großer Abschnitt der Funktionsfläche ohne eine Positionsänderung der Funktionsflächenreinigungseinrichtung abreinigbar ist.

Darüber hinaus kann das Auspressmittel als eine Auspresswalze ausgebildet sein.

Es ist vorgesehen, dass der Rücktropfschutz beispielsweise ein Platte, eine Wanne, ein Becken, eine Abdeckplane oder Ähnliches sein und/oder umfassen kann. Der Rücktropfschutz kann auch als ein eigenständiges Konstruktionselement ausgebildet sein, das unabhängig von der Reinigungsvorrichtung verlagerbar sein kann.

Die Aufgabe wird zudem gelöst durch ein Verfahren zum Reinigen eines im Tauchverfahren beschichteten Wickelguts, das in einem ein, Beschichtungsfluid umfassenden Beschichtungsfluidbehälter zumindest abschnittweise eingetaucht ist, mit den Schritten:
a. Austauchen des Wickelguts;
b. Entfernen von überschüssigem Beschichtungsfluid vom Wickelgut mittels mindestens einer zuvor beschriebenen Reinigungsvorrichtung.

Durch das zügige Abreinigen des noch flüssigen und/oder gelförmigen Beschichtungsfluids, ohne dass das Wickelgut zunächst zu einer Abreinigungsstation verfahren wird, kann das Abreinigen insbesondere schneller, präziser und energieeffizienter durchgeführt werden, als dies mit den aus dem Stand der Technik bekannten Verfahren möglich ist.

Ferner ist es auch möglich, dass die Anordnung des Wickelguts in Relation zu der Beschichtungsfluidoberfläche prozess- und/oder konstruktionstechnischen Bedürfnissen angepasst sein kann, etwa wenn in einem Bereich der Funktionsfläche eine stärkere Schichtdicke des Beschichtungsfluids ausgebildet werden soll.

Schließlich ist bei einer Ausführungsform des Verfahrens vorgesehen, dass nach das Abreinigen mittels einer Reinigungsvorrichtung erfolgt, die zumindest eine in und/oder um das Wickelgut bewegbare Düse aufweist und das Wickelgut bereits während des Austauchens von der Düse mittels des mit Druck beaufschlagten, insbesondere gasförmigen, Fluids abgereinigt wird.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Abtrennvorrichtung.

In der Zeichnung zeigt:
- Figur 1: eine schematische dargestellte Vorderansicht einer Reinigungsvorrichtung mit Wickelgut;
- Figur 2 u. 3: eine schematisch dargestellte Vorderansichten der Reinigungsvorrichtung gemäß Figur 1 mit austauchendem Wickelgut;
- Figur 4: eine schematisch dargestellte Vorderansicht der Reinigungsvorrichtung gemäß Figur 1 mit ausgetauchtem Wickelgut;
- Figur 5 - 7: ausschnittsweise vergrößerte, schematisch dargestellte Vorderansichten von verschiedener Ausführungsformen von Funktionsflächenreinigungseinrichtungen.

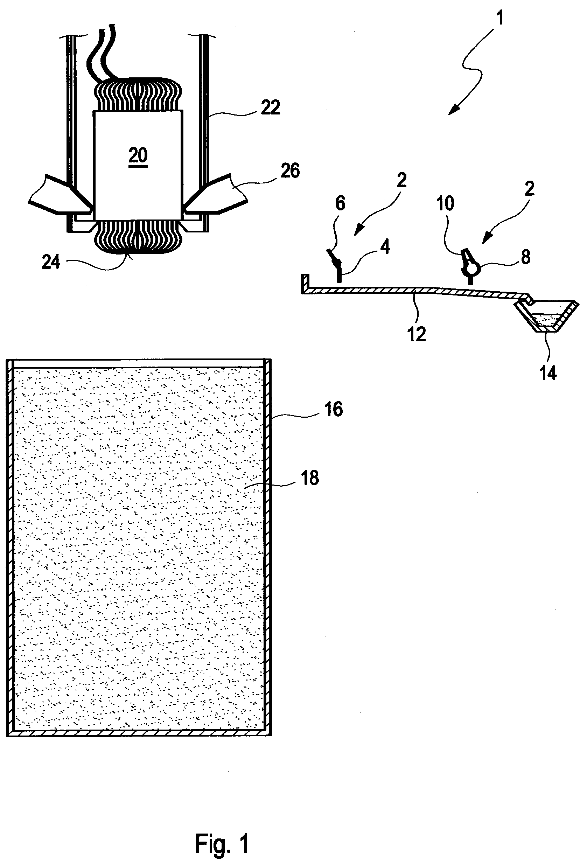

In Figur 1 ist eine Ausführungsform einer Reinigungsvorrichtung 1 gezeigt, die eine Funktionsflächenreinigungseinrichtung 2 aus einer Halterung 4 und einem Abstreifelement 6, eine Funktionsflächenreinigungseinrichtung 2 aus einer an einem Rohrkörper 8 festgelegten Saugdüse 10 und einen flächig ausgebildeten Rücktropfschutz 12 mit einem Sammelabschnitt 14 aufweist.

Die Reinigungsvorrichtung 1 ist neben einem Beschichtungsfluidbehälter 16 angeordnet in dem ein Beschichtungsfluid 18 angeordnet ist. Oberhalb des Beschichtungsfluidbehälters 16 ist das Wickelgut 20 angeordnet, das von Tauchhalterungen 22 gehalten ist. Auf seiner dem Beschichtungsfluidbehälter 16 zugewandten Seite weist das Wickelgut 20 eine Funktionsfläche 24 auf. Diese umfasst einen Blech-Stator des Blechpakets umfasst. Benachbart zu der Funktionsfläche 24 sind zwei mit Druckluft beaufschlagbare und entlang der Tauchhalterungen 22 verfahrbare Düsen 26 der Reinigungsvorrichtung 1 angeordnet.

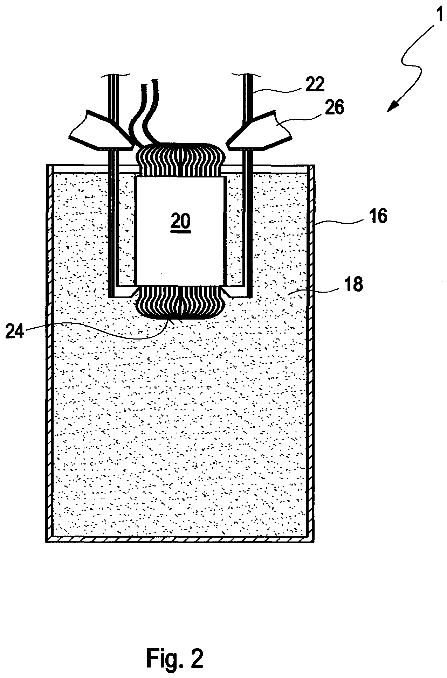

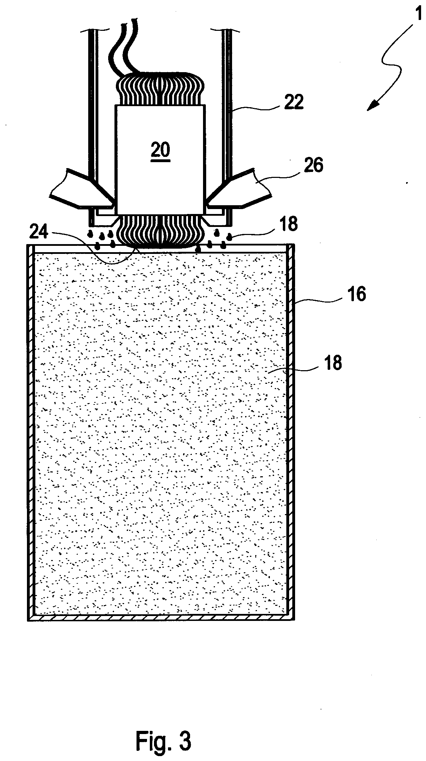

In den Figuren 2 und 3 ist gezeigt, wie das in das Beschichtungsfluid 18 getauchte Wickelgut 20 ausgetaucht wird. Dabei werden die Düsen 26 mit Druckluft beaufschlagt und derart entlang der Tauchhalterungen 22 verfahren, dass an dem Wickelgut 20 anhaftendes Beschichtungsfluid 18 abgeblasen wird.

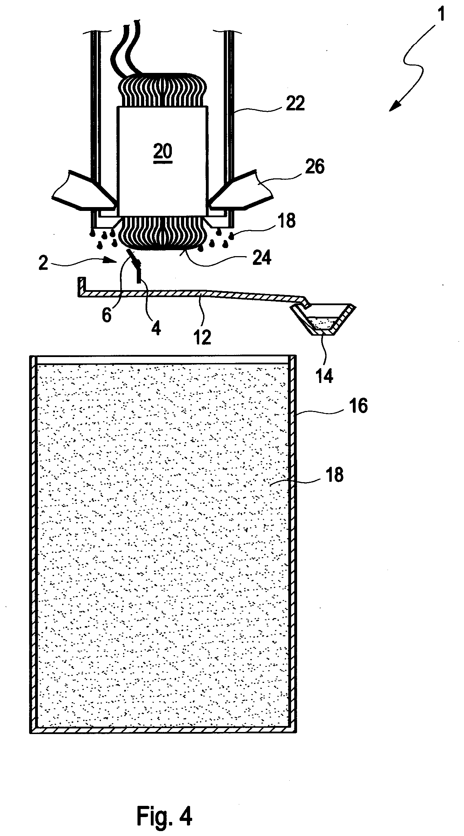

In Figur 4 ist das Wickelgut 20 gezeigt, nachdem es vollständig aus dem Beschichtungsfluid 18 ausgetaucht ist und nachdem ausreichend flüssiges Beschichtungsfluid 18 während einer Abtropfphase abtropfen konnte. Um ein weiteres Abtropfen des immer weiter aushärtenden und gelartig werdenden Beschichtungsfluids 18 zu verhindern, ist zwischen dem Wickelgut 20 und dem Beschichtungsfluid 18 der Rücktropfschutz 12 mit dem Sammelabschnitt 14 angeordnet. Um das sich im Bereich der Funktionsfläche 24 sammelnde Beschichtungsfluid 18 abzureinigen, ist das Abstreifelement 6 der Funktionsflächenreinigungseinrichtungen 2 mit der Funktionsfläche 24 in Anlage gebracht.

Das Beschichtungsfluid 18, das nach wie vor flüssig genug ist, um sich selbstständig von dem Wickelgut 20 zu lösen, wird von dem Rücktropfschutz 12 aufgefangen und sammelt sich in dem Sammelabschnitt 14.

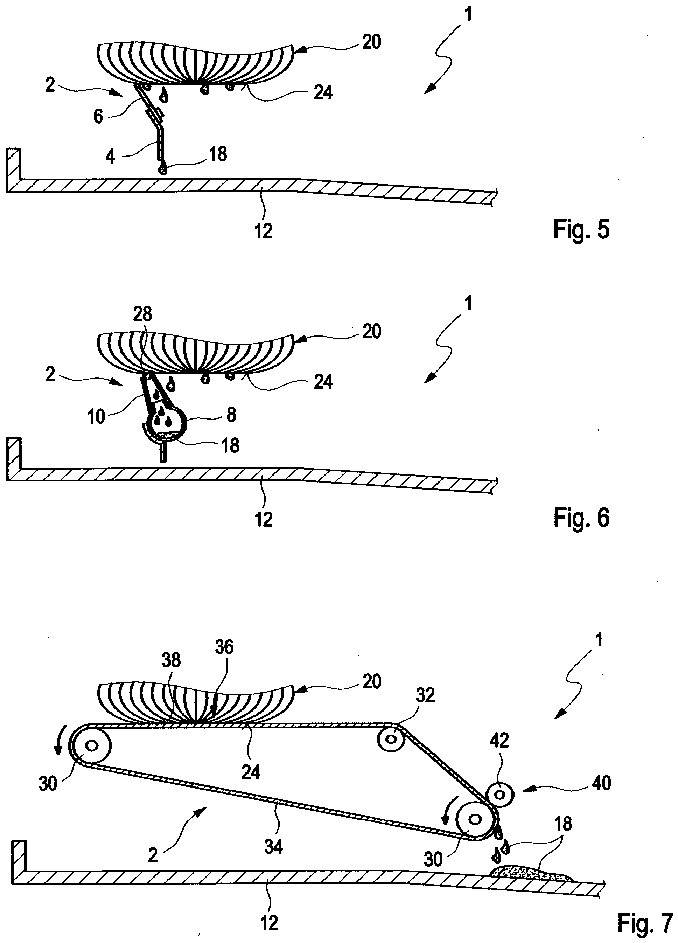

In Figur 5 ist eine ausschnittsweise vergrößert dargestellte schematische Ansicht der Reinigungsvorrichtung 1 gezeigt. Im Detail ist die eine Halterung 4 und einem Abstreifelement 6 aufweisende Funktionsflächenreinigungseinrichtung 2 gezeigt. Das Abstreifelement 6 ist mit der Funktionsfläche 24 in Anlage gebracht und leitet das an der Funktionsfläche 24 haftende Beschichtungsfluid 18 in Richtung des Rücktropfschutzes 12.

Die in Figur 6 gezeigte Funktionsflächenreinigungseinrichtung 2 weist einen Rohrkörper 8 und eine Saugdüse 10 auf. Die Saugdüse 10 weist eine in Richtung der Funktionsfläche 24 gerichteten und mit dem Rohrkörper 8 fluidleitend verbundenen Saugöffnung 28 auf. In dem Rohrkörper 8 ist ein Unterdruck ausgebildet durch den überschüssiges Beschichtungsfluid 18 von der Funktionsfläche 24 abgereinigt wird. Das abgereinigte Beschichtungsfluid 18 wird durch den Rohrkörper 8 hindurch abgeleitet und sammelt sich nicht auf dem Rücktropfschutz 12.

Die in Figur 7 gezeigte Funktionsflächenreinigungseinrichtung 2 weist ein durch zwei voneinander beabstandete Umlenkwalzen 30 geführtes und von einer Antriebswalze 32 angetriebenes Endlosband 34 auf. Das Endlosband 34 ist aus einem saugfähigen Material hergestellt und bildet in einem Anlageabschnitt 36 eine der Funktionsfläche 24 zugewandte Reinigungsfläche 38 aus. Die Reinigungsfläche 38 ist mit der Funktionsfläche 24 in Anlage gebracht. Im Bereich der Reinigungsfläche 38 wird überschüssiges Beschichtungsfluid 18 von dem Endlosband 34 aufgesaugt und in Richtung einer Auspresseinrichtung 40 gefördert. Die Auspresseinrichtung 40 ist aus einer der Umlenkwalzen 30 und einer Auspresswalze 42 gebildet. In der Auspresseinrichtung 40 wird das Endlosband 34 durch die Umlenkwalze 30 und die Auspresswalze 42 gequetscht und das aufgenommene Beschichtungsfluid 18 aus dem Endlosband 34 ausgetragen.

### Bezugszeichenliste

- 1.: Reinigungsvorrichtung
- 2.: Funktionsflächenreinigungseinrichtung
- 4.: Halterung
- 6.: Abstreifelement
- 8.: Rohrkörper
- 10.: Saugdüse
- 12.: Rücktropfschutz
- 14.: Sammelabschnitt
- 16.: Beschichtungsfluidbehälter
- 18.: Beschichtungsfluid
- 20.: Wickelgut
- 22.: Tauchhalterung
- 24.: Funktionsfläche
- 26.: Düse
- 28.: Saugöffnung
- 30.: Umlenkwalze
- 32.: Antriebswalze
- 34.: Endlosband
- 36.: Anlageabschnitt
- 38.: Reinigungsfläche
- 40.: Auspresseinrichtung
- 42.: Auspresswalze

## Patentansprüche

1. Reinigungsvorrichtung (1) zum Abreinigen eines Wickelguts (20), das im Tauchverfahren in einem ein Beschichtungsfluid (18) umfassenden Beschichtungsfluidbehälter (16) beschichtet worden ist, wobei die Reinigungsvorrichtung (1) zumindest eine Funktionsflächenreinigungseinrichtung (2) aufweist, mittels der überschüssiges Beschichtungsfluid (18) von einer Funktionsfläche (24) des Wickelguts (20) unmittelbar mit oder beim Austauchen aus dem Beschichtungsfluid (18) abreinigbar ist, **dadurch gekennzeichnet, dass** die Reinigungsvorrichtung (1) zumindest eine in und/ oder um das Wickelgut (20) bewegbare Düse (26) aufweist, mittels der das Wickelgut (20) zumindest abschnittsweise mittels eines mit Druck beaufschlagten, insbesondere gasförmigen, Fluids abreinigbar ist und dass die Reinigungsvorrichtung (1) einen Rücktropfschutz (12) aufweist, der zwischen dem aus dem Beschichtungsfluid (18) ausgetauchten Wickelgut (20) und einer Beschichtungsfluidoberfläche des Beschichtungsfluids (18) anordenbar ist und durch den ein Rücktropfen von überschüssigem Beschichtungsfluid (18) in den Beschichtungsfluidbehälter (16) verhindert ist, wobei der Rücktropfschutz (12) einen Sammelabschnitt (14) aufweist in dem durch den Rücktropfschutz (12) aufgefangenes Beschichtungsfluid (18) gesammelt wird

2. Reinigungsvorrichtung (1) nach Anspruch 1, **dadurch gekennzeichnet, dass** die Funktionsflächenreinigungseinrichtung (2) eine Halterung (4) und ein an der Halterung (4) festgelegtes und sich von der Halterung (4) in Richtung der Funktionsfläche (24) erstreckendes streifenförmiges Abstreifelement (6) aufweist, das mit der Funktionsfläche (24) in Anlage bringbar ist und mittels dessen überschüssiges Beschichtungsfluid (18) von der Funktionsfläche (24) abreinigbar ist.

3. Reinigungsvorrichtung (1) nach Anspruch 1 oder 2, **dadurch gekennzeichnet, dass** die Funktionsflächenreinigungseinrichtung (2) einen Rohrkörper (8) und zumindest eine Saugdüse (10) mit einer in Richtung der Funktionsfläche (24) gerichteten und mit dem Rohrkörper (8) fluidleitend verbundenen Saugöffnung (28) aufweist, mittels derer überschüssiges Beschichtungsfluid (18) unter Nutzung eines in dem Rohrkörper (8) ausbildbaren Unterdrucks von der Funktionsfläche (24) abreinigbar ist.

4. Reinigungsvorrichtung (1) nach einem der vorhergehenden Ansprüche, **dadurch gekennzeichnet, dass** die Funktionsflächenreinigungseinrichtung (2) ein durch zumindest zwei voneinander beabstandete Umlenkwalzen (30) geführtes und von zumindest einer Antriebswalze (32) antreibbares Endlosband (34) aus einem saugfähigen Material aufweist, das in einem Anlageabschnitt (36) eine der Funktionsfläche (24) zugewandte Reinigungsfläche (38) umfasst, die zumindest abschnittsweise mit der Funktionsfläche (24) in Anlage bringbar ist.

5. Verfahren zum Reinigen eines im Tauchverfahren beschichteten Wickelguts (20), das in einem ein, Beschichtungsfluid (18) umfassenden Beschichtungsfluidbehälter (16) zumindest abschnittweise eingetaucht ist, mit den Schritten:
a. Austauchen des Wickelguts (20);
b. Abreinigen bzw. Entfernen von überschüssigem Beschichtungsfluid (18) vom Wickelgut (20) mittels mindestens einer Reinigungsvorrichtung (1) nach einem der Ansprüche 1 bis 4.

6. Verfahren nach Anspruche 5, **dadurch gekennzeichnet, dass** das Abreinigen mittels einer Reinigungsvorrichtung (1) nach einem der Ansprüche 1 bis 4 erfolgt und das Wickelgut (20) bereits während des Austauchens von zumindest einer Düse (26) mittels des mit Druck beaufschlagten, insbesondere gasförmigen, Fluids abgereinigt wird.

## Claims

1. Cleaning device (1) for cleaning a winding material (20) which has been coated in an immersion process in a coating fluid container (16) comprising a coating fluid (18), with the cleaning device (1) having at least one functional surface cleaning device (2), by means of which excess coating fluid (18) can be cleaned off from a functional surface (24) of the winding material (20) directly with or as it emerges from the coating fluid (18), **characterized in that** the cleaning device (1) has at least one nozzle (26) which can be moved in and/or around the winding material (20), by means of which the material to be wound (20) can be cleaned, at least in sections, by means of a pressurised, in particular gaseous, fluid, and **in that** the cleaning device (1) has a drip-back protection device (12) which can be arranged between the winding material (20) dipped out of the coating fluid (18) and a coating fluid surface of the coating fluid (18) and by means of which a return dripping of excess coating fluid (18) into the coating fluid container (16) is prevented, wherein the return drip protection (12) has a collecting section (14) in which coating fluid (18) collected by the return drip protection (12) is collected.

2. Cleaning device (1) according to claim 1, **characterised in that** the functional surface cleaning device (2) has a holder (4) and a strip-shaped stripping element (6) which is fixed to the holder (4) and extends from the holder (4) in the direction of the functional surface (24) and which can be brought into contact with the functional surface (24) and by means of which excess coating fluid (18) can be cleaned off the functional surface (24).

3. Cleaning device (1) according to claim 1 or 2, **characterised in that** the functional surface cleaning device (2) has a tubular body (8) and at least one suction nozzle (10) with a suction opening (28) which is directed in the direction of the functional surface (24) and is connected to the tubular body (8) in a fluid-conducting manner and by means of which excess coating fluid (18) can be cleaned off the functional surface (24) using a negative pressure which can be formed in the tubular body (8).

4. Cleaning device (1) according to one of the preceding claims, **characterised in that** the functional surface cleaning device (2) has drivable endless belt (34) of an absorbent material which is guided by at least two deflection rollers (30) spaced apart from one another and can be driven by at least one drive roller (32) and which in a contact section (36) comprises a cleaning surface (38) which faces the functional surface (24) and which can be brought into contact at least in sections with the functional surface (24).

5. A method of cleaning a dip-coated winding material (20) which is at least partially immersed in a coating fluid container (16) comprising a coating fluid (18), comprising the steps of:
a. Dipping the winding material (20);
b. Cleaning or removing excess coating fluid (18) from the winding material (20) by means of at least one cleaning device (1) according to one of claims 1 to 4.

6. Method according to claim 5, **characterised in that** the cleaning is carried out by means of a cleaning device (1) according to one of the claims 1 to 4 and the winding material (20) is already cleaned during the dipping by at least one nozzle (26) by means of the pressurised, in particular gaseous, fluid.

## Revendications

1. Dispositif de nettoyage (1) pour nettoyer un matériau enroulable (20) ayant été revêtu par immersion dans un récipient de fluide de revêtement (16) contenant un fluide de revêtement (18), le dispositif de nettoyage (1) ayant au moins un équipement de nettoyage de surfaces fonctionnelles (2) au moyen duquel l'excès de fluide de revêtement (18) peut être nettoyé d'une surface fonctionnelle (24) du matériau enroulable (20) directement ou à la remontée du fluide de revêtement (18), **caractérisé en ce que** le dispositif de nettoyage (1) présente au moins une buse (26) se déplaçant dans le matériau enroulable (20) et/ou autour de ce dernier, au moyen duquel le matériau enroulable (20) peut être nettoyé, au moins par sections, grâce à un fluide sous pression, en particulier gazeux, et **en ce que** le dispositif de nettoyage (1) comporte un dispositif anti-goutte (12) pouvant être placé entre le matériau enroulable (20) immergé dans le fluide de revêtement (18) et une surface de fluide de revêtement du fluide de revêtement (18), et permettant d'éviter que le fluide de revêtement (18) en excès ne goutte dans le récipient de fluide de revêtement (16), le dispositif anti-goutte (12) disposant d'une partie collectrice (14) collectant le fluide de revêtement (18) recueilli par le dispositif anti-goutte (12).

2. Dispositif de nettoyage (1) conformément à la revendication 1, **caractérisé en ce que** le dispositif de nettoyage de surfaces fonctionnelles (2) présente un support (4) et un élément racleur (6) en forme de bande fixé sur le support (4) s'étendant à partir du support (4) en direction de la surface fonctionnelle (24) et pouvant être mis en contact avec la surface fonctionnelle (24) et permettant de nettoyer l'excès de fluide de revêtement (18) de la surface fonctionnelle (24).

3. Dispositif de nettoyage (1) conformément à la revendication 1 ou 2, **caractérisé en ce que** le dispositif de nettoyage de surfaces fonctionnelles (2) présente un corps tubulaire (8) et au moins une buse d'aspiration (10) avec une ouverture d'aspiration (28) dirigée vers la surface fonctionnelle (24) et reliée au corps tubulaire (8) dans le sens de l'écoulement du fluide, au moyen de laquelle l'excès de fluide de revêtement (18) peut être nettoyé de la surface fonctionnelle (24) par une pression négative se formant dans le corps tubulaire (8).

4. Dispositif de nettoyage (1) conformément à l'une des revendications précédentes, **caractérisé en ce que** le dispositif de nettoyage de surfaces fonctionnelles (2) comporte une bande sans fin (34) fabriquée en un matériau absorbant, guidée par au moins deux rouleaux de renvoi (30) espacés l'un de l'autre et pouvant être entraînée par au moins un rouleau d'entraînement (32) et qui, dans une section d'application (36), comprend une surface de nettoyage (38) tournée vers la surface fonctionnelle (24) et pouvant être appliquée, au moins par sections, sur la surface fonctionnelle (24).

5. Procédé de nettoyage d'un matériau enroulable (20) revêtu par le procédé d'immersion, immergé au moins par sections dans un récipient de fluide de revêtement (16) contenant un liquide de revêtement (18), composé des étapes suivantes :
a. immersion du matériau enroulable (20) ;
b. nettoyage ou élimination de l'excès de fluide de revêtement (18) du matériau enroulable (20) au moyen d'au moins un dispositif de nettoyage (1) conformément à l'une des revendications 1 à 4.

6. Procédé conforme à la revendication 5, **caractérisé en ce que** le nettoyage est effectué au moyen d'un dispositif de nettoyage (1) conformément à l'une des revendications 1 à 4 et que le matériau enroulable (20) est déjà nettoyé lors de la sortie de l'immersion par au moins une buse (26) au moyen du fluide sous pression, en particulier gazeux.
